# EUROPÄISCHE PATENTANMELDUNG

(11) **EP 1 596 321 A2**
(43) Veröffentlichungstag der Anmeldung: **16.11.2005**
(21) Anmeldenummer: 05103816.4
(22) Anmeldetag: 09.05.2005
(51) Int. Cl.: G06K 9/22, G06F 3/033

(54) **Texteingabe in ein mobiles Gerät**

(30) Priorität: 11.05.2004 DE 102004023198
(71) Anmelder: SIEMENS AKTIENGESELLSCHAFT, 80333 München (DE)
(72) Erfinder: Jarczyk, Alexander, Dr., 85356, Freising (DE); Datta, Kathleen, Plainsboro, NJ New Jersey 08535 (US)

(57) **Zusammenfassung**

Vorrichtung zur Eingabe von Text bestehend aus einem mobilen Gerät und einer Eingabeeinrichtung, wobei die Eingabeeinrichtung einen optischen Sensor zur Erkennung des von der Eingabeeinrichtung geschriebenen Zeichens aufweist, mit einer Übertragungseinrichtung zur Übertragung des von dem optischen Sensor erkannten Zeichens zu dem mobilen Gerät, mit einer Anzeigeeinrichtung des mobilen Gerätes zur Darstellung des übertragenen Zeichens, wobei die Anzeigeeinrichtung in zumindest zwei Anzeigebereiche unterteilt ist, wobei ein erster Anzeigebereich das übertragene Zeichen anzeigt, mit einem Erkennungssystem, welches das übertragene Zeichen mit vordefinierten Zeichen vergleicht und entsprechend ein vermutetes Ergebnis der Erkennung in einem zweiten Anzeigebereich der Anzeigeeinrichtung anzeigt, mit einer Einrichtung zur Korrektur der Rotation des in dem ersten Anzeigebereich dargestellten Zeichens, wobei die Einrichtung zur Korrektur der Rotation an dem mobilen Gerät und/oder an der Eingabeeinrichtung sitzt.

## Beschreibung

Die Erfindung betrifft eine Vorrichtung zur Eingabe von Text, eine Eingabeeinrichtung zur Eingabe von Text in ein mobiles Gerät, ein mobiles Gerät zur Eingabe von Text durch eine Eingabeeinrichtung sowie ein Verfahren zur Eingabe von Text durch die erfindungsgemäße Vorrichtung.

Die Texteingabe auf mobilen Geräten, wie beispielsweise Mobilfunktelefonen, PDAs (PDAs = Persönlicher digitaler Assistent), Smartphones sowie mobilen Notebooks, ist weiterhin ein Problem, da eine Querty- bzw. Quertz-Tastatur sich nicht auf die gängigen 3x4 Keyboards ablösen lässt. Stiftbasierte Systeme arbeiten entweder mit einem Touchscreen oder sie benutzen verschiedene Referenzsysteme, um die Stiftbewegungen entweder mittels HWR (HWR = Handwriting recognition) oder einen virtuellen Keyboard umzusetzen.

Es ist bekannt, mit Hilfe von Stiften, Zeichen bzw. Texte auf dem Display von mobilen Geräten, wie beispielsweise Mobilfunktelefonen, darzustellen. Ein optischer Sensor in einem Stift teilt über ein Kabel und ein vorgeschaltetes HWR-System die erkannten Buchstaben dem mobilen Gerät mit. Wenn der Stift über ein Kabel oder über eine Funkverbindung mit dem Mobilfunktelefon verbunden ist, erfasst das System die Handbewegung auf beliebigen ebenen Unterlagen und gibt die, per Handschrifterkennung registrierten Zeichen an das Mobilfunktelefon weiter. Auf dem Display des Mobilfunktelefons erscheinen dann die Buchstaben. Hierbei ist aber problematisch, dass die Rotation des Stiftes auf jede erdenkliche Handhaltung des Benutzers kalibriert werden muss. Das bedeutet, dass der Benutzer keine Rückmeldung bekommt, ob er den Stift richtig gehalten hat. So kann es dazu kommen, dass durch eine falsche Kalibrierung der Rotation des Stiftes bzw. der Erkennung andere Zeichen auf dem Display des Mobilfunktelefons gezeigt werden, als der Nutzer geschrieben hat. Es ist nachträglich schwierig bzw. aufwändig diese Anzeigefehler zu korrigieren. Das übliche Vorgehen ist die Löschung des fehlerhaft erkannten Zeichens und die Neueingabe des gewünschten Zeichens.

Aufgabe der Erfindung ist es, eine Vorrichtung zur Eingabe von Text, eine Eingabeeinrichtung und ein mobiles Gerät hierzu sowie ein Verfahren zur Eingabe von Text zu schaffen, durch die bzw. das die Eingabe von Text auf einem mobilen Gerät vereinfacht wird.

Diese Aufgabe wird durch eine Vorrichtung zur Eingabe von Text mit den Merkmalen des Anspruchs 1, mit einer Eingabeeinrichtung zur Eingabe von Text in ein mobiles Gerät mit den Merkmalen des Anspruchs 8, mit einem mobilen Gerät zur Eingabe von Text durch eine Eingabeeinrichtung mit den Merkmalen des Anspruchs 9 sowie durch ein Verfahren zur Eingabe von Text mit den Merkmalen des Anspruchs 10 gelöst.

Eine Vorrichtung zur Eingabe von Text bestehend aus einem mobilen Gerät und einer Eingabeeinrichtung, wobei die Eingabeeinrichtung einen optischen Sensor zur Erkennung des von der Eingabeeinrichtung geschriebenen Zeichens aufweist, mit einer Übertragungseinrichtung zur Übertragung des von dem optischen Sensor erkannten Zeichens zu dem mobilen Gerät, mit einer Anzeigeeinrichtung des mobilen Geräts zur Darstellung des übertragenen Zeichens, wobei die Anzeigeeinrichtung in zumindest zwei Anzeigebereiche unterteilt ist, wobei ein erster Anzeigebereich das übertragene Zeichen anzeigt, mit einem Erkennungssystem, welches das übertragene Zeichen mit vordefinierten Zeichen vergleicht und entsprechend ein vermutetes Ergebnis der Erkennung in einem zweiten Anzeigebereich der Anzeigeeinrichtung anzeigt, mit einer Einrichtung zur Korrektur der Rotation des in dem ersten Anzeigebereich dargestellten Zeichens, wobei die Einrichtung zur Korrektur der Rotation an dem mobilen Gerät und/oder an der Eingabeeinrichtung sitzt, stellt eine Vorrichtung zur einfachen Eingabe von Text dar. Mit einer derartigen Vorrichtung zur Eingabe von Text kann eine Rotationskorrektur der übertragenen Zeichen durchgeführt werden, wodurch das Erkennungssystem auf die entsprechende Haltung der Eingabeeinrichtung, mit der die Zeichen geschrieben werden, bzw. auf die Schreibweise neu kalibriert werden kann. Die Eingabeeinrichtung hat in der Regel die Form eines Stiftes, mit einer Stiftspitze, die zur Eingabe der Zeichen auf einem in der Regel ebenen Untergrund geführt wird. Ein optischer Sensor an der Eingabeeinrichtung ist derart angeordnet, dass er die Bewegung der Spitze der Eingabeeinrichtung aufnimmt. Die aufgenommenen Daten werden durch eine Übertragungseinrichtung von der Eingabeeinrichtung zu dem mobilen Gerät übertragen. Die Übertragungseinrichtung kann beispielsweise eine schnurgebundene Verbindung oder eine Funkverbindung sein. Bei einer Funkverbindung kann beispielsweise eine Übertragung mittels Bluetooth zwischen der Eingabeeinrichtung und dem mobilen Gerät erfolgen. Das mobile Gerät weist eine Anzeigeeinrichtung, insbesondere ein Display, zur grafischen Darstellung des von der Eingabeeinrichtung übertragenen Zeichens auf, wobei die Anzeigeeinrichtung in zumindest zwei Anzeigebereiche unterteilt ist. Ein erster Anzeigebereich, ein sogenannter Strokebereich, zeigt das übertragene Zeichen (Stroke) an. Das in dem ersten Anzeigebereich übertragene Zeichen wird von einem Erkennungssystem des mobilen Gerätes erfasst, welches das Zeichen mit vordefinierten Zeichen vergleicht und das entsprechend vermutet Ergebnis der Erkennung in einem zweiten Anzeigebereich der Anzeigeeinrichtung anzeigt. Das heißt, das Erkennungssystem sucht nach gleichen bzw. ähnlichen Zeichen und stellt das dem übertragenen Zeichen am nächsten kommende Zeichen in dem zweiten Anzeigebereich der Anzeige dar. Die Vorrichtung weist ferner eine Einrichtung zur Korrektur der Rotation des in dem ersten Anzeigebereich dargestellten Zeichens auf, wodurch die Position bzw. die Lage des Zeichens in dem ersten Anzeigebereich verändert werden kann. Das in seiner Position geänderte Zeichen wird wiederum dem Erkennungssystem des mobilen Geräts zugeführt, welches erneut das Zeichen mit vordefinierten Zeichen vergleicht. Durch die Rotation des übertragenen Zeichens wird die Möglichkeit einer korrekten Erkennung durch das Erkennungssystem und damit der gewünschten Darstellung in dem zweiten Anzeigebereich der Anzeigeeinrichtung erhöht. Durch die Einrichtung zur Korrektur der Rotation des Zeichens kann dieses verändert werden, so dass die Erkennung des Zeichens durch das Erkennungssystem erleichtert wird. Nach durchgeführter Rotation und anschließender richtiger Erkennung des Zeichens und entsprechender Eingabe des Zeichens in dem zweiten Anzeigebereich der Anzeigeeinrichtung erhält das Erkennungssystem eine Rückmeldung zu diesem Zeichen. Nach Erhalt dieser Rückmeldung führt das Erkennungssystem eine Kalibrierung durch. D. h., das Erkennungssystem stellt sich automatisch auf die geschriebenen Zeichen bzw. auf die Schriftweise und Haltung der Eingabeeinrichtung ein. Die durchgeführte Rotation bei einem Zeichen wird automatisch bei der Erkennung des nächsten eingegebenen Zeichens berücksichtigt. Hierdurch wird die Erkennung des nächsten eingegebenen Zeichens erleichtert, da das Erkennungssystem auf die Schriftweise kalibriert worden ist. Die Eingabe eines Textes wird dadurch deutlich vereinfacht. Die Eingabe kann schneller erfolgen, da die Erkennung der Zeichen weniger fehlerhaft ist.

Vorteilhaft ist eine Vorrichtung, bei der das mobile Gerät und/oder die Eingabeeinrichtung eine Bestätigungseinrichtung, insbesondere in Form einer Taste, zur Bestätigung einer richtigen Erkennung des übertragenen Zeichens durch das Erkennungssystem aufweist. Das heißt, dem Betrachter der Anzeigeeinrichtung des mobilen Gerätes wird das beste vermutete Ergebnis der Erkennung in dem zweiten Anzeigebereich der Anzeigevorrichtung zusammen mit dem eventuell zuvor rotierten Zeichen in dem ersten Anzeigebereich der Anzeigeeinrichtung angezeigt. Entspricht die Erkennung der Erwartung des Betrachters, so betätigt er die Bestätigungseinrichtung, wodurch die Eingabe des in dem zweiten Anzeigebereich dargestellten Zeichens erfolgt. Danach kann er zur Eingabe des nächsten Zeichens übergehen. Entspricht die Anzeige des Zeichens in dem zweiten Anzeigebereich nicht den Erwartungen des Betrachters, so kann er erneut durch die Einrichtung zur Korrektur der Rotation des Zeichens in dem ersten Anzeigebereich der Anzeigeeinrichtung eine Rotationskorrektur des übertragenen Zeichens vornehmen. Das veränderte Zeichen wird dann erneut dem Erkennungssystem zugeführt.

Von Vorteil ist ferner eine Vorrichtung, bei der das mobile Gerät und/oder die Eingabeeinrichtung ein Eingabeelement, insbesondere in Form einer Taste, zur Löschung eines fehlerhaft erkannten Zeichens aufweist. Falls keine Übereinstimmung zwischen den geschriebenen Zeichen und dem von dem Erkennungssystem erkannten Zeichen erfolgt, kann über das Eingabeelement das fehlerhaft erkannte Zeichen gelöscht werden. Hierbei kann sowohl das Zeichen in dem ersten Anzeigebereich, als auch in dem zweiten Anzeigebereich gelöscht werden. Die Betätigungseinrichtung sowie das Eingabeelement können an dem mobilen Gerät und/oder an der Eingabeeinrichtung sitzen. Die Betätigungseinrichtung, als auch das Eingabeelement weisen idealerweise die Form einer Taste auf, die durch einfaches Drücken oder Verschieben betätigbar ist. Die Betätigungseinrichtung und das Eingabeelement können Tasten des mobilen Gerätes sein, die bereits vorhanden sind und auch andere Funktionen beinhalten.

Von Vorteil ist ferner eine Vorrichtung, bei der die Einrichtung zur Korrektur der Rotation ein Drehelement, einen kapazitiven Streifen oder zwei Eingabetasten aufweist, durch deren Betätigung das übertragene Zeichen in dem ersten Anzeigebereich nach links und nach rechts kippbar ist. Hierdurch ist eine einfache Korrektur der Rotation möglich. Je nachdem, wie die Einrichtung zur Korrektur der Rotation betätigt wird, kann das in dem ersten Anzeigebereich übertragene Zeichen nach links oder nach rechts gekippt werden. Die Einrichtung zur Korrektur der Rotation ist derart an dem mobilen Gerät und/oder an der Eingabeeinrichtung angeordnet, dass sie leicht durch den Benutzer bedient werden kann. Das Kippen des Zeichens erfolgt durch Drehen des Drehelementes um dessen Achse oder durch Betätigen einer der Eingabetasten.

Besonders geeignet ist eine Vorrichtung, bei der das Drehelement, die Eingabetasten oder der kapazitive Streifen seitlich der Anzeigeeinrichtung des mobilen Gerätes angeordnet ist bzw. sind. Eine derartige Anordnung schafft eine besonders einfache Bedienbarkeit der Einrichtung zur Korrektur der Rotation. So kann beispielsweise der Nutzer, der das mobile Gerät in den Händen hält, wenn er die Anzeigeeinrichtung betrachtet, die Einrichtung zur Korrektur der Rotation leicht durch die Finger, insbesondere durch den Daumen, betätigen. Ideal ist eine Anordnung der Einrichtung zur Korrektur der Rotation an dem mobilen Gerät und eine Anordnung der Bestätigungseinrichtung und des Eingabeelementes an der Eingabeeinrichtung. Hierdurch kann der Nutzer ohne Umgreifen mit einer Hand das mobile Gerät bedienen, während er mit der anderen Hand die Eingabeeinrichtung bedient. Dies ermöglicht ein schnelles Zusammenspiel der Bedienung des mobilen Gerätes und der Eingabeeinrichtung.

Das Drehelement kann an der Eingabeeinrichtung der Vorrichtung angeordnet sein. Ferner ist eine Vorrichtung vorteilhaft, bei der die Drehachse des Drehelementes senkrecht oder koaxial zur Mittelachse der Eingabeeinrichtung verläuft. Die Anordnung der Drehachse des Drehelementes senkrecht zur Mittelachse der Eingabeeinrichtung schafft eine einfache Bedienbarkeit des Drehelementes durch den Zeige- oder den Mittelfinger der Hand, welche die Eingabeeinrichtung bedient. Das Drehelement ist insbesondere in der Nähe der Spitze der Eingabeeinrichtung angeordnet. Die Anordnung der Drehachse koaxial zur Mittelachse der Eingabeeinrichtung ist idealerweise an dem der Spitze der Eingabeeinrichtung entgegengesetzten Ende der Eingabeeinrichtung. Bei einer derartigen Anordnung des Drehelementes wird dieses idealerweise durch die zweite Hand, d. h. die Hand, die nicht die Eingabeeinrichtung zum Schreiben des Zeichens bedient, betätigt.

Besonders geeignet ist eine Vorrichtung, bei der die Anzeigeeinrichtung des mobilen Gerätes einen dritten Anzeigebereich zur Anzeige von Zeichenvarianten aufweist. In diesem dritten Anzeigebereich werden Varianten, d. h. Zeichen oder Wörter, die den in dem ersten Anzeigebereich angezeigten Zeichen ähnlich sind, angezeigt. Hierdurch erhält der Nutzer der Vorrichtung einen Überblick möglicher Zeichenvarianten bzw. Wörter, die er auswählen kann, ohne dass er ein komplettes Wort zu Ende schreiben muss. Der Nutzer der Vorrichtung hat die Möglichkeit aus den in dem dritten Anzeigebereich der Anzeigeeinrichtung angezeigten Zeichenvarianten auszuwählen, wodurch er sehr schnell das gewünschte Zeichen oder Wort eingeben kann.

Eine Eingabeeinrichtung zur Eingabe von Text in ein mobiles Gerät, bei der die Eingabeeinrichtung zuvor beschriebene Merkmale aufweist, stellt eine einfache Eingabeeinrichtung zur Eingabe von Text in ein mobiles Gerät dar.
Ein mobiles Gerät zur Eingabe von Text durch eine zuvor beschriebene Eingabeeinrichtung, wobei das mobile Gerät Merkmale des zuvor beschriebenen mobilen Gerätes aufweist, schafft eine einfache Eingabe von Text. Eine derartige Eingabeeinrichtung und ein derartiges mobiles Gerät bilden die erfindungsgemäße Vorrichtung.

Die Aufgabe wird ferner durch ein Verfahren zur Eingabe von Text durch eine zuvor beschriebene Vorrichtung, bei welcher der optische Sensor der Eingabeeinrichtung eine Bewegung der Eingabeeinrichtung, insbesondere der Spitze der Eingabeeinrichtung, aufnimmt, bei dem die aufgenommenen Daten des geschriebenen Zeichens durch eine Übertragungseinrichtung von der Eingabeeinrichtung zu dem mobilen Gerät übertragen werden, bei dem das übertragene Zeichen in dem ersten Anzeigebereich der Anzeigeeinrichtung des mobilen Gerätes angezeigt wird, bei dem ein Erkennungssystem das übertragene Zeichen mit vordefinierten Zeichen vergleicht und nach dem Vergleich ein vermutetes Ergebnis der Erkennung in einem zweiten Anzeigebereich der Anzeigeeinrichtung angezeigt wird, und bei dem durch die Einrichtung zur Korrektur der Rotation das in dem ersten Anzeigebereich der Anzeigeeinrichtung dargestellte Zeichen nach rechts und nach links gekippt werden kann, gelöst. Ein derartiges Verfahren stellt eine einfache Möglichkeit der Texteingabe in ein mobiles Gerät dar. Das hier vorgestellte Verfahren basiert auf der Korrektur der Rotation des eingegebenen Zeichens durch beispielsweise ein Drehelement, einem kapazitiven Streifen, oder durch zwei Eingabetasten. Dem Betrachter der Anzeigeeinrichtung des mobilen Gerätes wird zunächst in dem zweiten Anzeigebereich der Anzeigeeinrichtung das beste vermutete Ergebnis der Erkennung des Erkennungssystems zusammen mit dem eventuell zuvor rotierten Zeichen in dem ersten Anzeigebereich der Anzeigeeinrichtung angezeigt. Entspricht die Erkennung der Erwartung des Betrachters, betätigt er die Bestätigungseinrichtung der Vorrichtung und schreitet zur nächsten Zeicheneingabe vor. Entspricht das in dem zweiten Anzeigebereich der Eingabeeinrichtung angezeigte Zeichen nicht der Erwartung des Betrachters, so kann er mit einer Betätigung der Einrichtung zur Korrektur der Rotation das Zeichen nach links bzw. rechts auf der Anzeige kippen und dabei die Korrektur der Rotation beobachten. Durch unterschiedlich starkes Betätigen der Einrichtung zur Korrektur des Zeichens kann er dieses mal weniger, mal mehr kippen. Zu dem, in dem ersten Anzeigebereich angezeigten Zeichen werden in dem dritten Anzeigebereich der Anzeigeeinrichtung Zeichenvarianten oder Wortvarianten aus einem Speicher oder einer Datenbank der Vorrichtung angezeigt, die mit dem in dem ersten Anzeigebereich angezeigten Zeichen assoziiert werden. Die Assoziierung erfolgt durch das Erkennungssystem.

Vorteilhaft ist ein Verfahren, bei dem, bei einer richtigen Erkennung des übertragenen Zeichens durch das Erkennungssystem, durch die Betätigung der Betätigungseinrichtung des mobilen Gerätes oder der Eingabeeinrichtung die Eingabe des Zeichens in dem zweiten Anzeigebereich der Anzeigeeinrichtung erfolgt. Stimmt das geschriebene Zeichen mit dem, in dem zweiten Anzeigebereich angezeigten Zeichen überein, so kann durch die Betätigung der Bestätigungseinrichtung die Eingabe erfolgen. Hiernach kann zur Eingabe des nächstfolgenden Zeichens übergegangen werden.

Vorteilhaft ist ferner ein Verfahren, bei dem, bei einer fehlerhaften Erkennung des übertragenen Zeichens durch das Erkennungssystem, durch die Betätigung des Eingabeelementes des mobilen Gerätes oder der Eingabeeinrichtung die Löschung des Zeichens in dem ersten und dem zweiten Anzeigebereich der Anzeigeeinrichtung erfolgt. Das heißt, findet eine fehlerhafte Erkennung des geschriebenen bzw. übertragenen Zeichens statt und kann auch durch Korrektur der Rotation das in dem ersten Anzeigebereich angezeigte Zeichen nicht erkannt werden, so ist es sinnvoll, das Zeichen zu löschen und erneut einzugeben.

Besonders geeignet ist ein Verfahren, bei dem durch die Eingabe eines Zeichens durch die Bestätigungseinrichtung des mobilen Gerätes oder der Eingabeeinrichtung, nach einem vorherigen Kippen des Zeichens in dem ersten Anzeigebereich der Anzeigeeinrichtung, das Erkennungssystem der Vorrichtung auf die Haltung bzw. die Bewegung der Eingabeeinrichtung kalibriert werden kann. Das heißt, das Erkennungssystem merkt sich die durchgeführte Rotation des zuvor eingegebenen Zeichens und ändert dadurch die Kalibrierung des Erkennungssystems, so dass bei dem nächsten eingegebenen Zeichen das Erkennungssystem auf die Handhaltung bzw. auf die Stiftbewegung eingestellt ist. Hierdurch wird die Erkennung des geschriebenen Zeichens verbessert, so dass die Chance einer Übereinstimmung zwischen geschriebenen Zeichen und erkanntem Zeichen erhöht wird. Je besser das Erkennungssystem auf die Bewegung des Stiftes abgestimmt ist, desto weniger Fehler treten bei der Erkennung auf und um so weniger muss das angezeigte Zeichen in dem ersten Anzeigebereich der Anzeigeeinrichtung rotiert werden. Durch diese automatische Kalibrierung die durch das Rotieren des eingegebenen Zeichens ausgelöst wird, ist eine einfache Texteingabe möglich, wobei wenig Fehler bei der Erkennung der geschriebenen Zeichen auftreten.

Von Vorteil ist ferner ein Verfahren, bei dem das in dem ersten Anzeigebereich angezeigte Zeichen durch eine Drehung des Drehelementes um dessen Drehachse in eine erste Richtung nach links gekippt und durch eine Drehung in die entgegengesetzte Richtung nach rechts gekippt werden kann. Das heißt, je nach Drehung des Drehelementes kann das geschriebene Zeichen in die eine oder andere Richtung rotiert bzw. gekippt werden. Eine alternative Möglichkeit zum Drehelement stellt der kapazitive Streifen dar. Das heißt, durch die Betätigung eines kapazitiven Streifens kann das in dem ersten Anzeigebereich angezeigte Zeichen nach links bzw. nach rechts gekippt werden. Eine weitere Möglichkeit des Kippens des angezeigten Zeichens nach links bzw. nach rechts stellt die Betätigung der ersten und der zweiten Eingabetaste dar. Das heißt, durch Betätigung der ersten Eingabetaste kann das angezeigte Zeichen nach links gekippt werden und durch Betätigung der zweiten Eingabetaste kann das angezeigte Zeichen nach rechts gekippt werden. Die beiden Eingabetasten können bereits vorhandene Tasten des mobilen Gerätes sein, die diese Funktion des Kippens des angezeigten Zeichens bei der Eingabe übernehmen.

Besonders vorteilhaft ist ein Verfahren, bei dem durch eine Anhebung und anschließender Absenkung der Eingabeeinrichtung ein Wechsel zwischen den Anzeigebereichen der Anzeigeeinrichtung erfolgt. Das heißt, wird die Eingabeeinrichtung aus der Ebene, in der die Eingabe des Zeichens erfolgt, angehoben, so kann zwischen dem ersten, dem zweiten und dem dritten Anzeigebereich der Anzeigeeinrichtung gewechselt werden. Durch Anheben und Absenken der Eingabeeinrichtung erkennt die Vorrichtung, dass ein Wechsel zwischen den Anzeigebereichen gewünscht ist. Durch eine anschließende Bewegung der Eingabeeinrichtung in der Schreibebene kann dann der Wechsel zwischen den Anzeigebereichen erfolgen. Ferner kann durch die anschließende Bewegung der Eingabeeinrichtung in der Schreibebene ein Wechsel zwischen den angezeigten Zeichen bzw. Zeichenvarianten innerhalb eines Anzeigebereichs erfolgen.

So ist ein Verfahren vorteilhaft, bei dem durch eine Links/Rechts-Bewegung bzw. eine Rauf/Runter-Bewegung der Eingabeeinrichtung nach vorherigem Anheben und Absenken der Eingabeeinrichtung zwischen den Anzeigebereichen und/oder innerhalb eines Anzeigebereichs zwischen Zeichen, insbesondere zwischen mehreren angezeigten Zeichenvarianten in dem dritten Anzeigebereich der Anzeigeeinrichtung, gewechselt werden kann. D. h., dass beispielsweise durch eine Links/Rechts-Bewegung der Eingabeeinrichtung in der Schreibebene ein Wechsel zwischen mehreren angezeigten Zeichen oder Zeichenvarianten in dem einem Anzeigebereich, insbesondere in dem dritten Anzeigebereich, der Anzeigeeinrichtung durchführbar ist, und beispielsweise durch eine Rauf/Runter-Bewegung der Eingabeeinrichtung ein Wechsel zwischen den Anzeigebereichen möglich ist. Die Eingabeeinrichtung kann auf unterschiedlichste Bewegungen kalibriert sein, um einen entsprechenden Wechsel durchzuführen.

Durch die Betätigung der Einrichtung zur Korrektur der Rotation kann ein Wechsel vollzogen werden. Das bedeutet, dass nach einem Wechsel zu einem anderen Zeichen oder einem anderen Anzeigebereich durch die Betätigung der Einrichtung zur Korrektur der Rotation der Wechsel bestätigt wird. Vorteilhaft ist insbesondere ein Verfahren, bei dem durch die Betätigung der Einrichtung zur Korrektur der Rotation ein Wechsel zwischen mehreren angezeigten Zeichenvarianten in dem dritten Anzeigebereich der Anzeigeeinrichtung erfolgt. Die Einrichtung zur Korrektur der Rotation kann eine Doppelfunktion aufweisen. Ist durch ein Anheben und Absenken der Eingabeeinrichtung der Übergang zum dem sogenannten Wechselmodus erfolgt, so kann durch die Betätigung der Einrichtung zur Korrektur der Rotation der Wechsel vollzogen werden.

Ferner ist ein Verfahren vorteilhaft, bei dem eine Auswahl einer in dem dritten Anzeigebereich angezeigten Zeichenvariante durch die Bestätigungseinrichtung oder das Eingabeelement der Vorrichtung erfolgt. Ist durch das Rauf/Runter bzw. Links/Rechts-Bewegen der Eingabeeinrichtung eine gewünschte Zeichenvariante hinterlegt, so kann durch die Bestätigungseinrichtung oder das Eingabeelement die Eingabe dieser Zeichenvariante in dem zweiten Anzeigebereich der Anzeigeeinrichtung erfolgen.

Die zu der Vorrichtung gemachten Ausführungen gelten ebenfalls für die Eingabeeinrichtung, das mobile Gerät sowie für das Verfahren und umgekehrt.

Bevorzugte Ausführungsformen der vorliegenden Erfindung werden nachfolgend unter Bezugnahme auf die beiliegenden Zeichnungen näher erläutert. Es zeigen:
- Figur 1: eine erfindungsgemäße Vorrichtung bestehend aus einem mobilen Gerät und einer Eingabeeinrichtung sowie einem Drehelement an dem mobilen Gerät;
- Figur 2: eine erfindungsgemäße Vorrichtung mit einem mobilen Gerät und einer Eingabeeinrichtung mit Drehelement an der Spitze der Eingabeeinrichtung;
- Figur 3: eine erfindungsgemäße Vorrichtung mit einem mobilen Gerät und einer Eingabeeinrichtung mit Drehelement am Ende der Eingabeeinrichtung;
- Figur 4: ein mobiles Gerät mit drei Anzeigebereichen in der Anzeigeeinrichtung;
- Figur 5-8: ein Verfahren zur Eingabe von Text mit Hilfe der erfindungsgemäßen Vorrichtung.

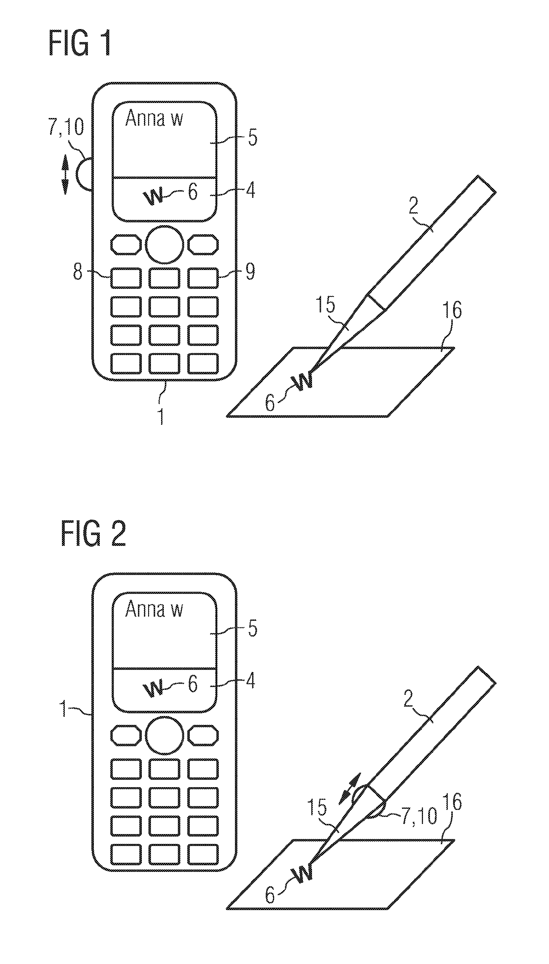

Die Figur 1 zeigt eine erfindungsgemäße Vorrichtung mit einem mobilen Gerät 1 und einer Eingabeeinrichtung 2. Das mobile Gerät 1 stellt ein Mobilfunktelefon in diesem Ausführungsbeispiel dar. Die Eingabeeinrichtung 2 weist die Form eines Stiftes auf, wobei die Spitze 15 der Eingabeeinrichtung 2 zum Schreiben eines Zeichens 6 auf einer ebenen Unterlage/Schreibebene 16 dient. Das mobile Gerät 1 weist seitlich der Anzeigeeinrichtung 3 eine Einrichtung zur Korrektur der Rotation 7 auf. Die Einrichtung zur Korrektur der Rotation 7 des in dem ersten Anzeigebereich 4 dargestellten Zeichens 6 ist in diesem Ausführungsbeispiel ein Drehelement 10. Die Anzeigeeinrichtung 3 weist zu dem ersten Anzeigebereich 4 einen zweiten Anzeigebereich 5 auf. Das mobile Gerät 1 weist ferner eine Bestätigungseinrichtung 8, insbesondere in Form einer Taste, zur Bestätigung einer richtigen Erkennung des übertragenen Zeichens 6 durch ein nicht dargestelltes Erkennungssystem des mobilen Gerätes 1, auf. In dem zweiten Anzeigebereich 5 werden die von dem Erkennungssystem erkannten Zeichen dargestellt. Die erfindungsgemäße Vorrichtung weist ferner eine Übertragungseinrichtung zur Übertragung des von einem optischen Sensor erkannten Zeichen 6, welches von der Eingabeeinrichtung 2 geschrieben wird, zu dem mobilen Gerät 1 auf. Die Übertragungseinrichtung besteht in der Regel aus einem Funkmodul, welches Teil des mobilen Gerätes 1 ist, sowie aus einem Funkmodul, welches Teil der Eingabeeinrichtung 2 ist. Durch Schreiben mit der Eingabeeinrichtung 2, insbesondere durch Führen der Spitze 15 der Eingabeeinrichtung 2 auf einer ebenen Schreibebene 16 kann ein Zeichen 6 geschrieben werden. Ein nicht näher dargestellter optischer Sensor der Eingabeeinrichtung 2 nimmt die Bewegung der Spitze 15 der Eingabeeinrichtung 2 auf, setzt diese in Daten um und überträgt mittels der Übertragungseinrichtung diese Daten an das mobile Gerät 1. Das geschriebene Zeichen 6 erscheint in dem ersten Anzeigebereich 4 der Anzeigeeinrichtung 3 des mobilen Gerätes 1. Je nachdem wie die Eingabeeinrichtung 2 durch den Nutzer gehalten wird bzw. je nach Schreibweise erscheint das geschriebene Zeichen 6 dementsprechend in dem Anzeigebereich 4 der Anzeigeeinrichtung 3. Das Erkennungssystem des mobilen Gerätes 1 vergleicht das geschriebene Zeichen 6 mit einem im Speicher gespeicherten Zeichen und zeigt in einem zweiten Anzeigebereich 5 der Anzeigeeinrichtung 3 ein Zeichen an, welches dem Zeichen 6 in dem Anzeigebereich 4 am nächsten kommt. Bei Übereinstimmung der Zeichen in dem ersten und zweiten Anzeigebereich 4, 5 kann der Nutzer durch Betätigung der Bestätigungseinrichtung 8 die Eingabe des Zeichens in dem zweiten Anzeigebereich 5 bestätigen. Nach dem Betätigen der Bestätigungseinrichtung 8, in der Regel eine Taste, erfolgt die Eingabe des Zeichens in dem zweiten Anzeigebereich 5 der Anzeigeeinrichtung 3. Hiernach kann ein nächstes Zeichen 6 eingegeben werden. Ein schlecht bzw. fehlerhaft dargestelltes Zeichen 6 kann durch das Eingabeelement 9 aus der Anzeige, d. h. aus dem ersten und/oder zweite Anzeigebereich 4, 5, gelöscht werden.

In der Figur 2 ist eine ähnliche Vorrichtung, wie in Figur 1 dargestellt. Nur die Einrichtung zur Korrektur der Rotation 7, in diesem Fall auch ein Drehelement 10, ist nicht an dem mobilen Gerät 1, sondern an der Eingabeeinrichtung 2 angeordnet. Das Drehelement 10 ist im unteren Bereich der Eingabeeinrichtung 2, d. h. in Nähe der Spitze 15 der Eingabeeinrichtung 2, angeordnet. Das Drehelement 10 ist hierbei leicht durch einen Finger der gleichen Hand, die die Eingabeeinrichtung 2 hält, bedienbar. Durch das Drehen des Drehelements 10 kann das in den Anzeigebereich 4 übertragene Zeichen 6 nach links und nach rechts gekippt werden.

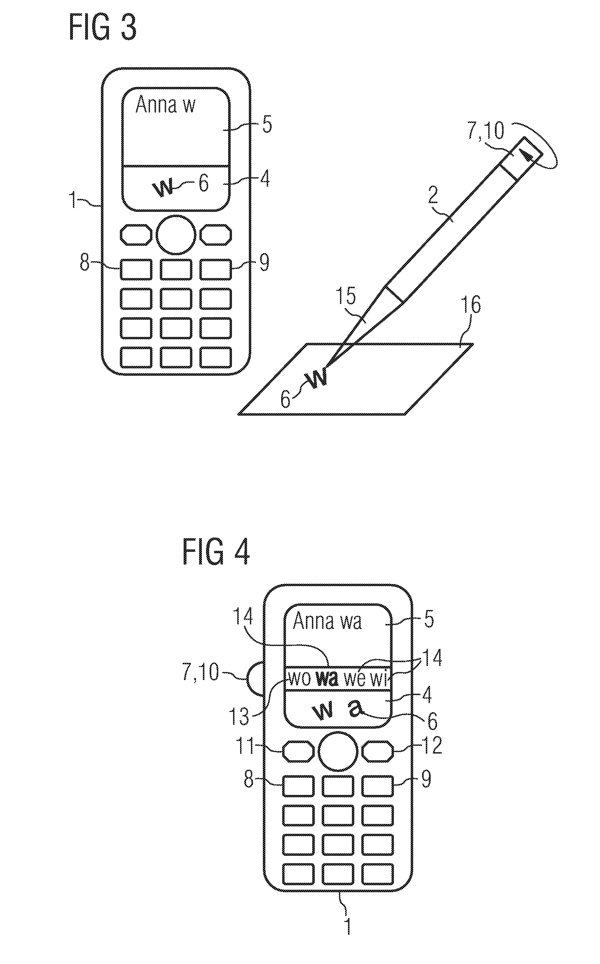

Figur 3 zeigt eine Variante der Anordnung der Einrichtung zur Korrektur der Rotation 7 des in dem ersten Anzeigebereich 4 dargestellten Zeichens 6. Die Einrichtung zur Korrektur der Rotation 7 stellt in diesem Ausführungsbeispiel ein Drehelement 10 dar, welches der der Spitze 15 der Eingabeeinrichtung 2 entgegengesetzten Seite der Eingabeeinrichtung 2 angeordnet ist. Das Drehelement 10 ist in dieser Ausführungsform koaxial zur Achse der Eingabeeinrichtung 2 angeordnet. Das Drehelement 10 kann in diesem Ausführungsbeispiel durch die Hand des Nutzers bedient werden, die nicht die Eingabeeinrichtung 2 hält.

In der Figur 4 ist ein mobiles Gerät 1 mit einer Anzeigeeinrichtung 3 dargestellt, wobei die Anzeigeeinrichtung 3 einen ersten Anzeigebereich 4, einen zweiten Anzeigebereich 5 sowie einen dritten Anzeigebereich 13 aufweist. Der dritte Anzeigebereich 13 zeigt Zeichenvarianten 14 an, die das Erkennungssystem zu dem in dem Anzeigebereich 4 dargestellten Zeichen 6 assoziiert. Der Nutzer kann die in dem dritten Anzeigebereich 13 angezeigten Zeichenvarianten 14 auswählen, wodurch eine schnellere Eingabe von Zeichen, insbesondere von zusammenhängenden Zeichen und Wörtern, in dem Anzeigebereich 5 der Anzeigeeinrichtung 3 möglich ist.

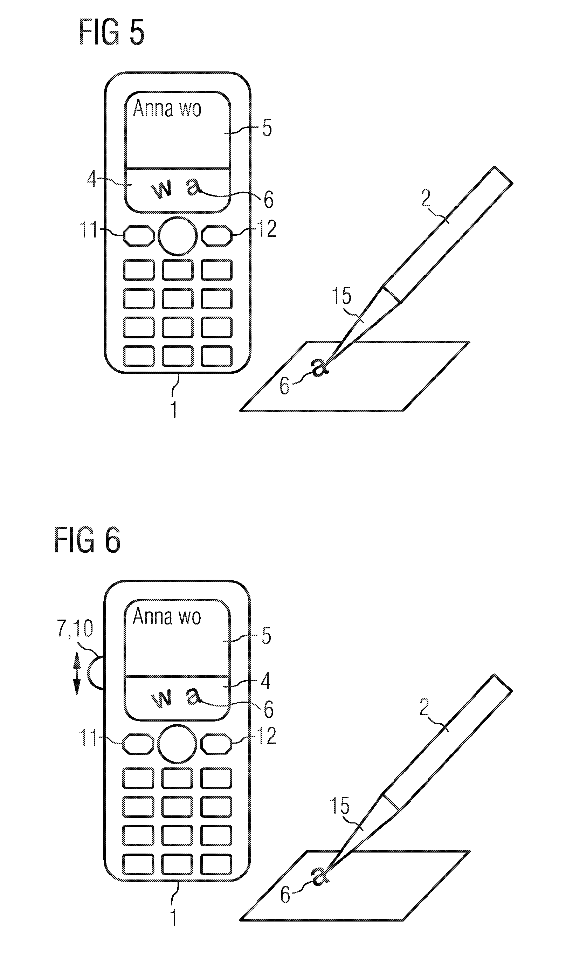

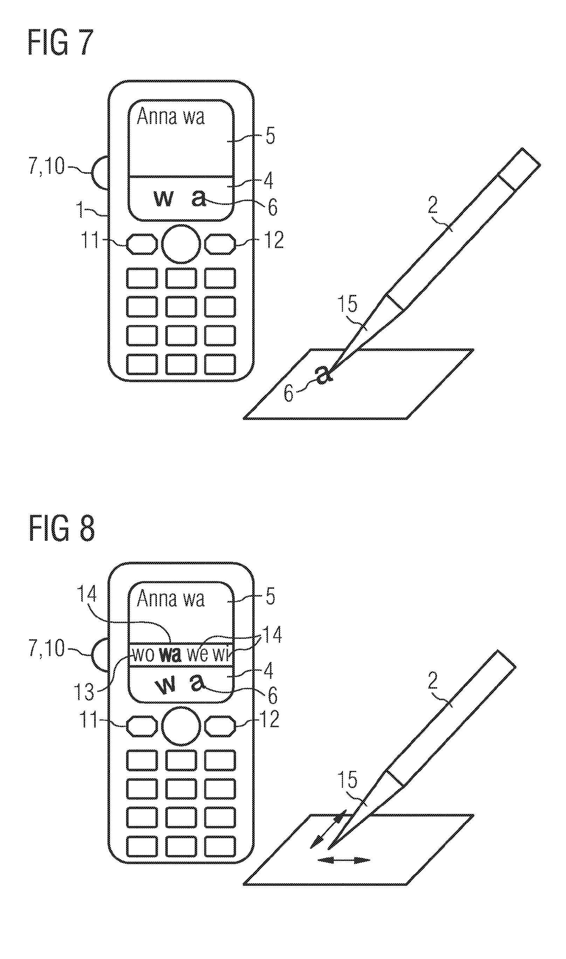

In den Figuren 5 bis 8 wird das Verfahren zur Eingabe von Text auf der erfinderischen Vorrichtung näher erläutert. Mit Hilfe der Eingabeeinrichtung 2 schreibt der Nutzer ein Zeichen, hier Buchstabe a, auf eine ebene Unterlage bzw. Schreibebene 16, siehe Figur 5. Die Bewegung der Spitze 15 der Eingabeeinrichtung 2 wird von einem nicht näher dargestellten optischen Sensor der Eingabeeinrichtung 2 aufgenommen. Die aufgenommenen Daten des geschriebenen Zeichens 6 werden von der Eingabeeinrichtung 2 zu dem mobilen Gerät übertragen. Das übertragene Zeichen 6 wird in dem ersten Anzeigebereich 4 der Anzeigeeinrichtung 3 des mobilen Gerätes 1 angezeigt. Das nicht näher dargestellte Erkennungssystem des mobilen Gerätes 1 vergleicht das in dem ersten Anzeigebereich 4 dargestellte Zeichen 6 mit Zeichen, die in einem dem Erkennungssystem angegliederten Speicher vorliegen. Das Ergebnis der Erkennung wird in dem zweiten Anzeigebereich 5 dargestellt. Stimmt die Erkennung mit dem Zeichen überein, welches der Nutzer eingeben will, so kann die entgültige Eingabe des Zeichens in dem zweiten Anzeigebereich 5 durch Betätigung der Bestätigungstaste 8 erfolgen. Die Bestätigungstaste 8 kann an dem mobilen Gerät 1 oder auch an der Eingabeeinrichtung 2 angeordnet sein. In diesem Ausführungsbeispiel in Figur 5 erkennt das Erkennungssystem kein a, sondern ein o. Durch Betätigen der Einrichtung zur Korrektur der Rotation 7, hier des Drehelementes 10 and dem mobilen Gerät 1, kann dass in dem ersten Anzeigebereich 4 der Anzeigeeinrichtung 3 des mobilen Gerätes 1 angezeigte a nach links oder nach rechts gekippt werden. Durch Drehen des Drehelementes 10 im Uhrzeigerrichtung wird das in dem ersten Anzeigebereich 4 angezeigte a und das zuvor geschriebene w nach rechts gekippt, siehe Figur 7. Das Erkennungssystem vergleicht das bzw. die durch die Einrichtung zur Korrektur der Rotation 7 gekippte(n) Zeichen erneut mit gespeicherten Zeichen und zeigt das Ergebnis der Erkennung erneut in dem zweiten Anzeigebereich 5 der Anzeigeeinrichtung 3 an. In dem Ausführungsbeispiel in Figur 7 erkennt das Erkennungssystem das vom Nutzer geschriebene Zeichen richtig, so dass die Eingabe des Zeichens erfolgen kann durch Betätigung der Bestätigungstaste 8. Durch die Rotation des Zeichens 6 in dem ersten Anzeigebereich 4, die erneute Erkennung des Zeichens durch das Erkennungssystem und die anschließende Bestätigung der richtigen Erkennung wird das Erkennungssystem neu kalibriert. D. h., das Erkennungssystem registriert die zuletzt durchgeführte Rotation des Zeichens 6 und kalibriert sich derart, dass bei dem nächsten eingegebenen Zeichen das Erkennungssystem die Rotation des vorherigen Zeichens 6 berücksichtigt. Hierdurch wird das Erkennungssystem auf die Schriftweise bzw. auf die Haltung der Eingabeeinrichtung 2 automatisch kalibriert. Durch diese automatische Kalibrierung des Erkennungssystems auf die jeweilige Haltung der Eingabeeinrichtung 2 bzw. die Schreibweise des Nutzers kann eine hohe Rate der korrekten Erkennung von geschriebenen Zeichen 6 erzielt werden. Die Eingabe von Text wird dadurch deutlich erleichtert.

In Figur 8 ist eine Alternative der Eingabe eines Zeichens oder eines Wortes dargestellt. Zusätzlich zum ersten und zweiten Anzeigebereich 4, 5 weist die Anzeigeeinrichtung 3 einen weiteren Anzeigebereich 13 auf. In diesem zusätzlichen Anzeigebereich 13 werden dem Nutzer der Vorrichtung Zeichen oder Wortvarianten 14 angezeigt, die das Erkennungssystem zu dem in dem ersten Anzeigebereich 4 angezeigten Zeichen 6 assoziiert. Der Nutzer kann durch eine Rauf-/Runterbewegung der Eingabeeinrichtung 2 die Anzeigebereiche 4, 5, 13 wechseln. Ist der Nutzer in den dritten Anzeigebereich 13 gewechselt, so kann er durch eine Rechts-/Linksbewegung der Eingabeeinrichtung 2 zwischen den angezeigten Zeichen oder Wortvarianten 14 hin- und herspringen. Durch Betätigen der Bestätigungseinrichtung 8 wird nach Auswahl eines Zeichens oder einer Wortvariante 14 das ausgewählte Zeichen oder die ausgewählte Wortvariante 14 in den zweiten Anzeigebereich übertragen und eingegeben. Die Anzeigebereiche 4, 5 und 13 können in einer Anzeigeebene der Anzeigeeinrichtung 2 oder in verschiedenen übereinanderliegenden Anzeigeebenen liegen.

Eine weitere nicht dargestellte Alternative der Korrektur des in dem ersten Anzeigebereich 4 angezeigten Zeichens 6 ist, dass nachdem der erste Anzeigebereich 4 ausgewählt worden ist, durch eine Rauf-/Runterbewegung der Eingabeeinrichtung 2 die Korrektur des Zeichens 6, d h. das Kippen des Zeichens 6, durch eine Rechts-/Linksbewegung der Eingabeeinrichtung 2 möglich ist.

## Patentansprüche

1. Vorrichtung zur Eingabe von Text bestehend aus einem mobilen Gerät (1) und einer Eingabeeinrichtung (2),
wobei die Eingabeeinrichtung (2) einen optischen Sensor zur Erkennung des von der Eingabeeinrichtung (2) geschriebenen Zeichens (6) aufweist,
mit einer Übertragungseinrichtung zur Übertragung des von dem optischen Sensor erkannten Zeichens (6) zu dem mobilen Gerät (1),
mit einer Anzeigeeinrichtung (3) des mobilen Gerätes (1) zur Darstellung des übertragenen Zeichens (6), wobei die Anzeigeeinrichtung (3) in zumindest zwei Anzeigebereiche (4, 5) unterteilt ist, wobei ein erster Anzeigebereich (4) das übertragene Zeichen (6) anzeigt,
mit einem Erkennungssystem, welches das übertragene Zeichen (6) mit vordefinierten Zeichen vergleicht und entsprechend ein vermutetes Ergebnis der Erkennung in einem zweiten Anzeigebereich (5) der Anzeigeeinrichtung (2) anzeigt,
mit einer Einrichtung zur Korrektur der Rotation (7) des in dem ersten Anzeigebereich (4) dargestellten Zeichens (6),
wobei die Einrichtung zur Korrektur der Rotation (7) an dem mobilen Gerät (1) und/oder an der Eingabeeinrichtung (2) sitzt.

2. Vorrichtung nach Anspruch 1, bei der das mobile Gerät (1) und/oder die Eingabeeinrichtung (2) eine Bestätigungseinrichtung (8), insbesondere in Form einer Taste, zur Bestätigung einer richtigen Erkennung des übertragenen Zeichens (6) durch das Erkennungssystem aufweist.

3. Vorrichtung nach Anspruch 1 oder 2, bei der das mobile Gerät (1) und/oder die Eingabeeinrichtung (2) ein Eingabeelement (9), insbesondere in Form einer Taste, zur Löschung eines fehlerhaft erkannten Zeichens (6) aufweist.

4. Vorrichtung nach einem der vorherigen Ansprüche, bei der die Einrichtung zur Korrektur der Rotation (7) ein Drehelement (10), einen kapazitiven Streifen oder zwei Eingabetasten (11, 12) aufweist, durch deren Betätigung das übertragene Zeichen (6) in dem ersten Anzeigebereich (4) nach links und nach rechts kippbar ist.

5. Vorrichtung nach Anspruch 4, bei der das Drehelement (10), die Eingabetasten (11, 12) oder der kapazitive Streifen seitlich der Anzeigeeinrichtung (3) des mobilen Gerätes (1) angeordnet ist.

6. Vorrichtung nach Anspruch 4, bei der die Drehachse des Drehelementes (10) senkrecht oder koaxial zur Mittelachse der Eingabeeinrichtung (2) verläuft.

7. Vorrichtung nach einem der vorherigen Ansprüche, bei der die Anzeigeeinrichtung (3) des mobilen Gerätes (1) einen dritten Anzeigebereich (13) zur Anzeige von Zeichenvarianten (14) aufweist.

8. Eingabeeinrichtung zur Eingabe von Text in ein mobiles Gerät, bei der die Eingabeeinrichtung Merkmale der Eingabeeinrichtung (2) nach einem der vorherigen Ansprüche 1 bis 7 aufweist.

9. Mobiles Gerät zur Eingabe von Text durch eine Eingabeeinrichtung (2) nach Anspruch 8, bei dem das mobile Gerät Merkmale des mobilen Gerätes (1) nach einem der Ansprüche 1 bis 7 aufweist.

10. Verfahren zur Eingabe von Text durch eine Vorrichtung nach einem der Ansprüche 1 bis 7, bei dem der optische Sensor der Eingabeeinrichtung (2) eine Bewegung der Eingabeeinrichtung (2), insbesondere einer Spitze (15) der Eingabeeinrichtung (2), aufnimmt,
bei dem die aufgenommenen Daten durch eine Übertragungseinrichtung von der Eingabeeinrichtung (2) zu dem mobilen Gerät (1) überträgt,
bei dem das übertragene Zeichen (6) in dem ersten Anzeigebereich (4) der Anzeigeeinrichtung (3) des mobilen Gerätes (1) angezeigt werden,
bei dem ein Erkennungssystem das übertragene Zeichen (6) mit vordefinierten Zeichen vergleicht und nach dem Vergleich ein vermutetes Ergebnis der Erkennung in einem zweiten Anzeigebereich (5) der Anzeigeeinrichtung (3) anzeigt, und
bei dem durch die Einrichtung zur Korrektur der Rotation (7) das in dem ersten Anzeigebereich (4) der Anzeigeeinrichtung (3) dargestellte Zeichen (6) nach rechts und nach links gekippt werden kann.

11. Verfahren nach Anspruch 10, bei dem, bei einer richtigen Erkennung des übertragenen Zeichens (6) durch das Erkennungssystem, durch die Betätigung der Bestätigungseinrichtung (8) des mobilen Gerätes (1) oder der Eingabeeinrichtung (2) die Eingabe des Zeichens (6) in dem zweiten Anzeigebereich (5) der Anzeigeeinrichtung (3) erfolgt.

12. Verfahren nach Anspruch 10 oder 11, bei dem, bei einer fehlerhaften Erkennung des übertragenen Zeichens (6) durch das Erkennungssystem, durch die Betätigung des Eingabeelements (9) des mobilen Gerätes (1) oder der Eingabeeinrichtung (2) die Löschung des Zeichens (6) in dem ersten und dem zweiten Anzeigebereich (4, 5) der Anzeigeeinrichtung (3) erfolgt.

13. Verfahren nach Anspruch 11, bei dem durch die Eingabe eines Zeichens (6) durch die Bestätigungseinrichtung (8) des mobilen Gerätes (1) oder der Eingabeeinrichtung (2), nach einem vorherigen Kippen des Zeichens (6) in dem ersten Anzeigebereich (4) der Anzeigeeinrichtung (3), das Erkennungssystem der Vorrichtung auf die Haltung bzw. die Bewegung der Eingabeeinrichtung (2) kalibriert werden kann.

14. Verfahren nach einem der Ansprüche 11 bis 13, bei dem das in dem ersten Anzeigebereich (4) angezeigte Zeichen (6) durch eine Drehung des Drehelementes (10) um dessen Drehachse in eine erste Richtung nach links gekippt und durch eine Drehung in die entgegengesetzte Richtung nach rechts gekippt werden kann.

15. Verfahren nach einem der Ansprüche 11 bis 13, bei dem das in dem ersten Anzeigebereich (4) angezeigte Zeichen (6) durch die Betätigung einer ersten Eingabetaste (11) nach links gekippt und durch die Betätigung einer zweiten Eingabetaste (12) nach rechts gekippt wird.

16. Verfahren nach einem der Ansprüche 11 bis 13, bei dem das in dem ersten Anzeigebereich (4) angezeigte Zeichen (6) durch die Betätigung eines kapazitiven Streifens nach links bzw. nach rechts gekippt werden kann.

17. Verfahren nach einem der Ansprüche 11 bis 16, bei dem durch eine Anhebung und anschließende Absenkung der Eingabeeinrichtung (2) ein Wechsel zwischen den Anzeigebereichen (4, 5, 13) der Anzeigeeinrichtung (3) erfolgt.

18. Verfahren nach Anspruch 17, bei dem durch eine Links/Rechtsbewegung bzw. eine Rauf-/Runterbewegung der Eingabeeinrichtung (2) zwischen den Anzeigebereichen (4, 5, 13) und/oder innerhalb eines Anzeigebereichs zwischen Zeichen, insbesondere zwischen mehreren angezeigten Zeichenvarianten (14) in dem dritten Anzeigebereich (13) der Anzeigeeinrichtung (3), gewechselt werden kann.

19. Verfahren nach Anspruch 17, bei dem durch die Betätigung der Einrichtung zur Korrektur der Rotation (7) ein Wechsel zwischen mehreren angezeigten Zeichenvarianten (14) in dem dritten Anzeigebereich (13) der Anzeigeeinrichtung (3) erfolgt.

20. Verfahren nach einem der Ansprüche 11 bis 19, bei dem eine Auswahl einer in dem dritten Anzeigebereich (13) angezeigten Zeichenvariante (14) durch die Bestätigungseinrichtung (8) oder das Eingabeelement (9) der Vorrichtung erfolgt.
